(19) **Europäisches Patentamt / European Patent Office / Office européen des brevets**

(11) **EP 4 316 792 B1**

(12) **EUROPEAN PATENT SPECIFICATION**

(45) Date of publication and mention
of the grant of the patent:
**11.06.2025 Bulletin 2025/24**

(21) Application number: **22779679.4**

(22) Date of filing: **24.02.2022**

(51) International Patent Classification (IPC):
**B29L 9/00** *(2006.01)*    **B32B 5/28** *(2006.01)*
**B29C 44/00** *(2006.01)*    **B29C 44/06** *(2006.01)*
**B29C 44/36** *(2006.01)*    **B29C 70/20** *(2006.01)*
**B29C 70/42** *(2006.01)*    **B29K 105/04** *(2006.01)*
**B29C 43/20** *(2006.01)*    **B29C 44/12** *(2006.01)*
**B29C 70/46** *(2006.01)*    **B29C 70/08** *(2006.01)*
**B32B 5/18** *(2006.01)*    **B32B 5/30** *(2006.01)*
**B32B 5/24** *(2006.01)*    **B29C 44/44** *(2006.01)*
**B29C 70/28** *(2006.01)*    **B29D 99/00** *(2010.01)*
**B32B 27/08** *(2006.01)*    **B32B 27/18** *(2006.01)*

(52) Cooperative Patent Classification (CPC):
**B29D 99/0025; B29C 43/18; B29C 43/203;**
**B29C 44/06; B29C 44/12; B29C 44/1285;**
**B29C 44/3415; B29C 44/445; B29C 70/086;**
**B29C 70/46; B32B 5/30; B32B 27/08; B32B 27/18;**
B29C 70/28; B29K 2105/04;      (Cont.)

(86) International application number:
**PCT/JP2022/007537**

(87) International publication number:
**WO 2022/209454 (06.10.2022 Gazette 2022/40)**

(54) **FLAT, LIGHTWEIGHT MEMBER AND MANUFACTURING METHOD THEREFOR**

FLACHES, LEICHTES ELEMENT UND HERSTELLUNGSVERFAHREN DAFÜR

ÉLÉMENT LÉGER, PLAT, ET PROCÉDÉ DE FABRICATION S'Y RAPPORTANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.03.2021 JP 2021056515**

(43) Date of publication of application:
**07.02.2024 Bulletin 2024/06**

(73) Proprietor: **Toray Industries, Inc.**
**Tokyo 103-8666 (JP)**

(72) Inventors:
• **TSUMURA, Yusuke**
**Nagoya-shi, Aichi 455-8502 (JP)**

• **MATSUSHIMA, Shogo**
**Nagoya-shi, Aichi 455-8502 (JP)**
• **NISHIZAKI, Akihiko**
**Nagoya-shi, Aichi 455-8502 (JP)**

(74) Representative: **Hoefer & Partner Patentanwälte mbB**
**Pilgersheimer Straße 20**
**81543 München (DE)**

(56) References cited:
**EP-A1- 3 556 544**    **EP-A2- 0 407 996**
**WO-A1-2012/124450**    **WO-A1-2021/010028**
**JP-A- 2001 526 128**    **JP-A- 2004 217 829**
**JP-B2- 5 466 076**    **US-A- 4 892 462**
**US-A1- 2001 013 669**    **US-A1- 2009 149 284**
**US-A1- 2020 047 879**    **US-A1- 2020 298 521**

**(Cont. next page)**

(52) Cooperative Patent Classification (CPC): (Cont.)
 B29K 2105/0872; B29L 2009/00; B29L 2031/08;
 B32B 2262/00; B32B 2264/203

**Description**

TECHNICAL FIELD

The present invention relates to a flat lightweight member (fiber reinforced plastics) including a skin layer on a surface and a core layer inside, which can be used as a propeller blade, and a method for manufacturing the flat lightweight member. Specifically, the present invention relates to a flat lightweight member made from a fiber reinforced resin that is favorable in appearance quality and also excellent in productivity while being excellent in mechanical property at the ends and adhesiveness between a core layer and a skin layer, and a method for manufacturing the flat lightweight member.

BACKGROUND ART

Fiber reinforced resins are used in a wide range of industrial fields because of having light weight, high strength, and high rigidity. In particular, molded articles are suitably used, which are obtained by using a prepreg that is an intermediate material where a fiber reinforced material made from long fibers such as reinforcing fibers is impregnated with a resin. In addition, a sandwich structure material that has a skin layer of a fiber reinforced resin and a porous core layer is, because of being lightweight and tough, effectively used in transportation facilities such as aircrafts, automobiles, and ships, and in the fields of sports and leisure. Known as fiber reinforced plastics that have such a sandwich structure are flat lightweight members that include: a skin layer including a fiber reinforced material; and a core layer including lightweight particles and a matrix resin. In this regard, the flat lightweight member refers to a structure that varies in periphery length and in cross-sectional shape in the longitudinal direction, and means a member that can be used mainly as a propeller blade.

Known as such a flat lightweight member is a propeller blade that has an upper surface prepreg and a lower surface prepreg stacked and bonded in the thickness direction at the ends. This flat lightweight member is obtained by stacking the upper surface prepreg and the lower surface prepreg respectively in one and the other split dies, and disposing a foaming agent in the space formed by the both prepregs when the dies are combined (for example, Patent Document 1).

In addition, known as a similar flat lightweight member is a flat lightweight member that has a main part composed of a skin layer, a core layer, and a separation layer, a peripheral edge (an outer peripheral part of the flat lightweight member, when the flat lightweight member is viewed from the direction in which the largest projected area is obtained) composed of a skin layer and a core layer, and reinforcing fibers for reinforcement additionally disposed at sites corresponding to a leading edge and a trailing edge when the flat lightweight member is used as a propeller blade. In this flat lightweight member, the separation layer that suppresses passage of lightweight particles is disposed between the core layer and the skin layer, and the separation layer separates the lightweight particles from the mixture of lightweight particles and matrix resin constituting the core layer, and causes a dry reinforcing fiber material constituting the skin layer to be impregnated with only the matrix resin, thereby forming the skin layer (for example, Patent Document 2).

Furthermore, techniques of using a prepreg that has incisions provided in a regular distribution over the entire in-plane area, or a preform obtained by laminating the prepregs are known for obtaining the uniform dynamic characteristics and excellent dimensional stability of flat lightweight members (for example, Patent Document 3). Patent Document 4 teaches a composite hockey stick blade including a fiber reinforced, high-density foam polymeric core material overlaid with a plastic wrap. The fiber reinforcement material, in the form of a plurality of milled or long fibers, provides increased toughness and stiffness of the high density polymeric foam core material. The hockey stick blade may be utilized as a replacement blade for a two-piece hockey stick, or may be a portion of a one-piece hockey stick.

PRIOR ART DOCUMENTS

PATENT DOCUMENTS

Patent Document 1: Japanese Patent Laid-open Publication No. 2020-151876

Patent Document 2: Japanese Patent Laid-open Publication No. 8-276441

Patent Document 3: JP Patent No. 5,272,418

Patent Document 4: US 2009/149284 A1

SUMMARY OF INVENTION

PROBLEMS TO BE SOLVED BY THE INVENTION

The flat lightweight member where the upper surface prepreg and the lower surface prepreg are stacked and bonded in the thickness direction at the ends as mentioned above, however, requires a region for stacking and bonding the both prepregs at the ends. Thus, the flat lightweight member creates a need to dispose a prepreg that has a high specific gravity even for a region that should be originally formed from a lightweight core layer, and has the problem of increasing the weight of the flat lightweight member. In addition, for the same reason, the shapes of flat lightweight members to which such a configuration can be applied may be limited in some cases. Moreover, the employment of a structure with ends of prepregs simply butted with each other has the problem of decreasing the joint strength, and causing lightweight particles and a matrix resin that form the core layer to leak to the outside of the flat lightweight member, thereby impairing the appearance quality.

In addition, the conventional flat lightweight member where the main part is composed of the skin layer, the core layer, and the separation layer, the peripheral edge is composed of the skin layer and the core layer, and reinforcing fibers for reinforcement are further disposed at sites corresponding to the leading edge and the trailing edge as mentioned above possibly causes peeling in the vicinity of the separation layer when the member is used over a long period of time, and has the problem of failing to integrate the core layer and the skin layer firmly, if the position of the separation layer disposed is not appropriate.

Furthermore, the conventional method for manufacturing a flat lightweight member, of stacking the upper surface prepreg and the lower surface prepreg respectively in one and the other split dies, and disposing the foaming agent in the space formed by the both prepregs when the dies are combined, requires heating the dies to cure the prepregs after stacking the prepregs on the surface of the dies that have three-dimensional shapes at room temperature, and requires not only a huge amount of labor and a special technique and device for the stacking step, but also a large amount of time for raising and lowering the temperatures of the dies, and thus has a problem with productivity.

In addition, the conventional method for manufacturing the flat lightweight member, in which the skin layer is formed by allowing a portion of the matrix resin for constituting the core layer to pass through the separation layer and then impregnating and curing the dry reinforcing fiber material, has difficulty in obtaining a flat lightweight member with high accuracy and small variations, because individually disposed upper and lower separation layers are displaced or deviated at the time of molding when the flat lightweight member has a three-dimensional shape instead of a simple flat-plate shape. In addition, positioning is difficult in disposing the reinforcing fibers for reinforcement, and the reinforcing fibers are also likely to be displaced during fiber reinforced resin molding, and thus, the center of gravity of the flat lightweight member may be changed in some cases. Furthermore, in the process of impregnating the reinforcing fibers with the matrix resin, air bubbles referred to as voids are generated at the ends, and may degrade the mechanical property or impair the appearance quality in some cases.

As described above, such conventional technique as mentioned above have extreme difficulty in providing a flat lightweight member that is excellent in mechanical property at the ends and adhesiveness between a core layer and a skin layer, and is favorable in appearance quality.

Accordingly, an object of the present invention, focusing on such problems mentioned above, is to provide a flat lightweight member that is favorable in appearance quality and also excellent in productivity while being excellent in mechanical property at the ends and adhesiveness between a core layer and a skin layer, and a method for manufacturing the flat lightweight member.

SOLUTIONS TO THE PROBLEMS

For solving the problems mentioned above, the present invention, which is defined in the appended claims, employs one of the following configurations.

(1) A flat lightweight member including: skin layers disposed on both surfaces of the flat lightweight member; an end reinforcing layer disposed so as to have contact with both inner surfaces of the skin layers on the both surfaces at an end of the flat lightweight member; and a core layer disposed in a space surrounded by the skin layers and the end reinforcing layer so as to have direct contact with the inner surfaces of the skin layers, characterized in that the skin layer includes one or more layers including reinforcing fibers aligned in one direction and a first matrix resin, the end reinforcing layer includes a fiber reinforced resin sheet, and the core layer includes thermally expandable particles and a second matrix resin, wherein the reinforcing fibers raised from the skin layers are in the core layer.

(2) The flat lightweight member according to (1), characterized in that the fiber reinforced resin sheet includes reinforcing fibers aligned in one direction and a first matrix resin.

(3) The flat lightweight member according to (1), characterized in that the fiber reinforced resin sheet is a fiber reinforced foam including reinforcing fibers.

(4) The flat lightweight member according to any one of (1) to (3), characterized in that the reinforcing fibers raised from the end reinforcing layer are in the core layer.

(5) The flat lightweight member according to any one of (1) to (4), characterized in that the space surrounded by the skin layers and the end reinforcing layer is a closed space.

(6) The flat lightweight member according to any one of (1) to (5), characterized in that in the end reinforcing layer, the fiber reinforced resin sheet has a wound structure or a folded structure.

(7) A method for manufacturing a flat lightweight member with the use of a double-sided die including an upper die and a lower die, the method characterized by including:

a preparing step of preparing one skin layer and the other skin layer with the use of a prepreg including reinforcing fibers aligned in one direction and a first matrix resin, and preparing an end reinforcing layer with the use of a fiber reinforced resin sheet;

a first disposing step of disposing the one skin layer in the lower die heated to a molding temperature, and placing the end reinforcing layer on at least a part of a peripheral edge of the one skin layer;

an introducing step of placing a mixture of thermally expandable particles and a second matrix resin on the one skin layer;

a second disposing step of further disposing the other skin layer on the upper surface of the one skin layer, and then bringing the end reinforcing layer into contact with at least a part of a peripheral edge of the other skin layer; and

a die closing step of closing the upper die heated to the molding temperature, and

further including a step of expanding the volume of the thermally expandable particles to form a core layer.

(8) A method for manufacturing a flat lightweight member with the use of a double-sided die including an upper die and a lower die, the method characterized by including:

a preparing step of bonding an end reinforcing layer made from a fiber reinforced resin sheet to at least a part of a peripheral edge of one skin layer made from a prepreg including reinforcing fibers aligned in one direction and a first matrix resin to prepare a skin layer with the end reinforcing layer, and preparing the other skin layer made from the prepreg;

a first disposing step of disposing the skin layer with the end reinforcing layer in the lower die heated to a molding temperature;

an introducing step of introducing a mixture of thermally expandable particles and a second matrix resin on the one skin layer;

a second disposing step of further disposing the other skin layer over the upper surface of the skin layer with the end reinforcing layer to bring the end reinforcing layer into contact with at least a part of a peripheral edge of the other skin layer; and

a die closing step of closing the upper die heated to the molding temperature, and

further including a step of expanding the volume of the thermally expandable particles to form a core layer.

(9) The method for manufacturing a flat lightweight member according to (7) or (8), characterized in that the reinforcing fiber resin sheet is a prepreg including reinforcing fibers aligned in one direction and a first matrix resin.

(10) The method for manufacturing a flat lightweight member according to (7) or (8), characterized in that the reinforcing fiber resin sheet is a fiber reinforced foam including reinforcing fibers.

(11) The method for manufacturing a flat lightweight member according to any one of (7) to (10), characterized in that an incised prepreg is used as the prepreg.

(12) The method for manufacturing a flat lightweight member according to any one of (7) to (11), characterized in that a site of at least the one skin layer corresponding to an inner surface of the flat lightweight member is raised before completing the die closing step.

(13) The method for manufacturing a flat lightweight member according to any one of (7) to (12), characterized in that a site of the end reinforcing layer corresponding to an inner surface of the flat lightweight member is raised before completing the die closing step.

EFFECTS OF THE INVENTION

The flat lightweight member and the method for manufacturing the flat lightweight member according to the present invention can provide a flat lightweight member that is favorable in appearance quality and also excellent in productivity while being excellent in mechanical property at the ends and adhesiveness between a core layer and a skin layer.

BRIEF DESCRIPTION OF THE DRAWINGS

Figs. 1(a) and 1(b) are respectively a top view and a cross-sectional view taken along line A-A' in an example of a flat lightweight member according to the present invention.

Figs. 2(a) and 2(b) are respectively a cross-sectional view that shows an example of a raised skin layer and an enlarged view that shows an example of the raised skin layer in an example of a flat lightweight member according to the present invention.

Fig. 3 is a cross-sectional view that show examples of a positional relationship among skin layers, end reinforcing layers, and a core layer in a flat lightweight member according to the present invention.

Fig. 4 is a perspective top view that shows examples of a closed space surrounded by skin layers and end reinforcing layers in a flat lightweight member according to the present invention.

Fig. 5 shows examples of an end reinforcing layer that respectively has a wound structure or a folded structure in a flat lightweight member according to the present invention.

Fig. 6 is a diagram illustrating respective steps in a method for manufacturing a flat lightweight member according to the present invention.

Fig. 7 is a diagram illustrating respective steps in another method for manufacturing a flat lightweight member according to the present invention.

EMBODIMENTS OF THE INVENTION

Hereinafter, the present invention will be described in detail with reference to the drawings together with embodiments.

A flat lightweight member according to the present invention includes: skin layers disposed on both surfaces, end reinforcing layers disposed so as to have contact with both inner surfaces of the skin layers on the both surfaces at the ends of the flat lightweight member; and a core layer disposed in the space surrounded by the skin layers and the end reinforcing layers so as to have direct contact with the inner surfaces of the skin layers. The skin layer is formed with the use of one or more prepregs including reinforcing fibers aligned in one direction and a first matrix resin, and includes one or more layers including the reinforcing fibers and the first matrix resin. In addition, the end reinforcing layer includes a fiber reinforced resin sheet, and the core layer includes thermally expandable particles as lightweight particles and a second matrix resin.

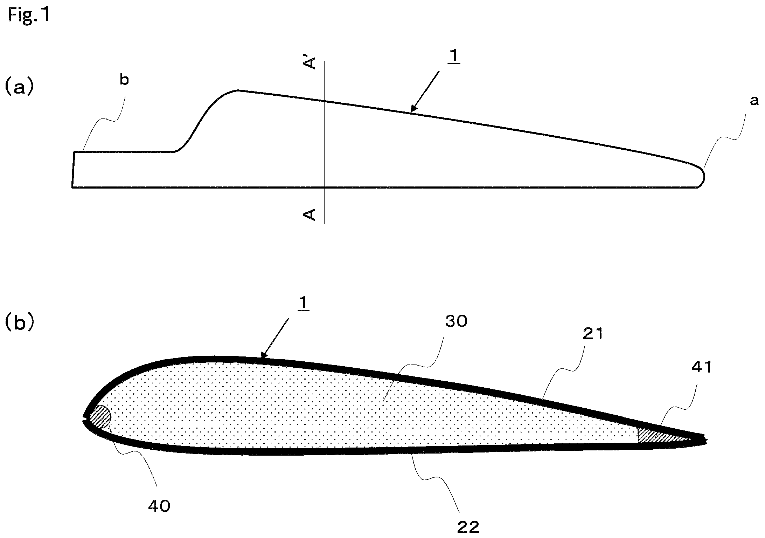

Fig. 1 shows an embodiment of a flat lightweight member according to the present invention for use as a propeller blade. Fig. 1(a) shows a top view of a flat lightweight member 1, where the right side and left side in the drawing respectively represent a distal end a and a root part b. Fig. 1(b) shows an A-A' cross section of the flat lightweight member 1 (that is, a cross section in a direction orthogonal to the longitudinal direction of the flat lightweight member 1). The flat lightweight member 1 mainly includes skin layers 21 and 22, a core layer 30, and end reinforcing layers 40 and 41. The skin layers 21 and 22 are disposed on both surfaces of the flat lightweight member 1, the end reinforcing layers 40 and 41 are disposed at the ends (sites corresponding to the leading edge and trailing edge of the propeller blade) so as to have contact with both inner surfaces of the skin layers 21 and 22 on the both surfaces, and the core layer 30 is disposed in the space surrounded by the skin layers 21 and 22 and the end reinforcing layers 40 and 41 so as to have direct contact with the skin layers.

[Skin Layer]

The skin layer according to the present invention is formed mainly with the use of a prepreg including reinforcing fibers aligned in one direction and a first matrix resin, and includes one or more layers containing the reinforcing fibers and the first matrix resin.

In this regard, the inner surface of the skin layer is a surface of the skin layer, located on the inner surface side of the flat lightweight member. It is to be noted that the "surface" means the outer surface of the flat lightweight member, unless otherwise noted.

In the present invention, the thickest part of the skin layer constituting one surface of the flat lightweight member is preferably formed from two or more layers of prepregs, and more preferably has four or more layers of prepregs. More specifically, the part preferably has two or more layers, more preferably four or more layers including the reinforcing fibers and the first matrix resin.

The thickness of the skin layer according to the present invention is preferably 0.1 mm or more and 10 mm or less, more preferably 0.2 mm or more and 5 mm or less, still more preferably 0.4 mm or more and 2 mm or less. The thickness falls within the preferred range mentioned above, thereby making it easy to transfer heat uniformly even to the inside of the laminate at the time of molding, and thus providing a flat lightweight member that is excellent in appearance.

The skin layer is also preferably formed with the use of a prepreg that has two or more orientation directions, more preferably a prepreg that has three or more orientation directions. Thus, the skin layer has two or more, more preferably three or more orientation directions. Such a prepreg is obtained by preparing multiple prepregs that have reinforcing fibers aligned in one direction, and laminating the prepregs such that the orientation directions of the reinforcing fibers are shifted. When the longitudinal direction of the flat lightweight member is regarded as a 0 degree direction, for example, examples of preferred aspects of the laminated configuration include a laminated configuration including two types of 0 degrees and 90 degrees, a laminated configuration including three types of 0 degrees and ±45 degrees, a laminated configuration including three types of 0 degrees and ±30 degrees, and a laminated configuration including four types of 0 degrees, ±45 degrees, and 90 degrees.

In addition, from the viewpoint of achieving a balance between impact property and rigidity, it is preferable for the skin layer to use one or more unidirectional prepregs that are prepregs with reinforcing fibers aligned in one direction, and further use one or more woven fabric prepregs that are prepregs with continuous fibers woven. In particular, it is according to a preferred aspect that a woven fabric prepreg is disposed on the outermost surface of the flat lightweight member, whereas a unidirectional prepreg is disposed inside the woven fabric prepreg such that the fiber direction correspond to the longitudinal direction of the flat lightweight member, thereby providing a flat lightweight member including a skin layer with a woven fabric substrate of reinforcing fibers at the outermost surface and with reinforcing fibers arranged in one direction inside. Such a configuration allows, when the flat lightweight member is used as a propeller blade, the reinforcing fibers derived from unidirectional prepreg to take charge of tensile stress applied in the longitudinal direction of the flat lightweight member, while the woven fabric substrate derived from the woven fabric prepreg keeps the flat lightweight member from being broken by the collision of a flying object.

[End Reinforcing Layer]

The end reinforcing layer according to the present invention is disposed at peripheral edges of the flat lightweight member. The peripheral edge of the flat lightweight member referred to in the present invention means a peripheral part, when the flat lightweight member is projected from above (that is, an outer peripheral part of the flat lightweight member, when the flat lightweight member is viewed from the direction in which the largest projected area is obtained). In addition, the inner surface of the end reinforcing layer is a surface of the end reinforcing layer, located on the inner surface side of the flat lightweight member.

The end reinforcing layer according to the present invention includes a fiber reinforced resin sheet.

The fiber reinforced resin sheet preferably includes a prepreg including reinforcing fibers aligned in one direction and a first matrix resin. The fiber reinforced resin sheet preferably includes two or more layers of prepregs, and more preferably four or more layers of prepregs. Such a fiber reinforced resin sheet causes the end reinforcing layer to include one or more layers including the reinforcing fibers aligned in one direction and the first matrix resin.

In contrast, the fiber reinforced resin sheet of the end reinforcing layer is also preferably a fiber reinforced foam (porous body) including reinforcing fibers. Examples of such a fiber reinforced foam can include a sandwich structure (for example, described in WO 14/162873 A) and a nonwoven fabric (for example, described in Japanese Patent Laid-open Publication No. 2014-172201) where one surface is impregnated with a thermoplastic resin, and reinforcing fibers are exposed from the other surface.

Depending on the dimensions of the flat lightweight member, in a cross section orthogonal to the outline direction of the peripheral edge, the cross-sectional area of the end reinforcing layer according to the present invention is preferably 1 mm$^2$ or more and 1200 mm$^2$ or less, more preferably 5 mm$^2$ or more and 500 mm$^2$ or less. Setting the thickness so as to have such a cross-sectional area makes it easy to transfer heat uniformly even to the inside of the laminate (that is, over the overall thickness of the end reinforcing layer,), and thus provides a flat lightweight member that is excellent in appearance.

The end reinforcing layer according to the present invention preferably has a fiber orientation in a direction along the outline of the peripheral edge. For example, after preparing an elongated laminate that have reinforcing fibers oriented in the longitudinal direction with the use of the fiber reinforced resin sheet, the laminate is disposed along the outline of the peripheral edge of the flat lightweight member as desired, thereby allowing the fiber orientation in the direction along the outline of the peripheral edge of the flat lightweight member.

[Core Layer]

The core layer according to the present invention has direct contact with the skin layer, unlike a conventional flat lightweight member including a separation layer between a skin layer and a core layer. The employment of such a configuration allows the core layer and the skin layer to be firmly integrated, thus making peeling less likely to be caused in the vicinity of the separation layer even in the case of use over a long period of time.

The core layer according to the present invention is formed from a lightweight resin and a second matrix resin. The ratio by weight between the lightweight particles (thermally expandable particles) and the second matrix in the core layer preferably falls within the range of 5% or more and 100% or less, more preferably within the range of 10% or more and 40% or less, when the weight of the second matrix resin is regarded as 100%. When the weight of the lightweight particles is 5% or more, the reduced specific gravity of the core layer makes a lightweight property more likely to be exhibited. In addition, when the weight is 10% or more, the partial "resin rich" can be reduced, which is generated by the second matrix resin separated from the lightweight particles, and thus, the core layer has a more homogeneous structure, thereby allowing variations in the center of gravity to be reduced. In contrast, when the weight is 100% or less, the second matrix resin can be made present between the lightweight particles to crosslink the lightweight particles with each other, thereby making the core layer rigid and then maintaining the shape thereof. When the weight average molecular weight is more than 100%, crosslinking between the lightweight particles becomes insufficient, so that the core layer becomes brittle and the shape easily collapses. Furthermore, when the weight is 40% or less, the periphery of the lightweight particles can be covered with the second matrix resin, thus, the generation of cracks in the core layer is suppressed, and the mechanical property of the core layer can be kept favorable over a long period of time.

[Fiber Reinforced Resin Sheet]

The fiber reinforced resin sheet for use in the present invention mainly includes reinforcing fibers and a first matrix resin.

The reinforcing fibers of the fiber reinforced resin sheet may be continuous fibers or discontinuous fibers. The form of the fiber reinforced resin sheet is not particularly limited, but from the viewpoint of mechanical property, it is preferable to use a prepreg as the fiber reinforced resin sheet. In addition, from the viewpoint of lightweight property, it is preferable to use a fiber reinforced resin foam as the fiber reinforced resin sheet.

[Prepreg]

The prepreg for use in the present invention mainly includes reinforcing fibers and a first matrix resin.

The reinforcing-fiber volume fraction preferred for the prepreg is preferably 40% or more and 80% or less, more preferably 45% or more and 75% or less, still more preferably 50% or more and 70% or less.

The amount of the reinforcing fibers included in the prepreg is preferably 50 g/m$^2$ or more and 1000 g/m$^2$ or less in terms of the basis weight of the reinforcing fiber in the case of a sheet-shaped material. If the basis weight is excessively small, holes without reinforcing fibers therein may be produced in the surface of the prepreg. The basis weight is equal to or more than the lower limit of the above-mentioned preferred range, thereby allowing the elimination of holes that are breaking origins. In addition, the basis weight is equal to or less than the upper limit of the above-mentioned preferred range, thereby allowing heat to be transferred uniformly to the inside in preheating for molding. The basis weight is more preferably 100 g/m$^2$ or more and 600 g/m$^2$ or less, still more preferably 150 g/m$^2$ or more and 400 g/m$^2$ or less for achieving a balance between the uniformity of the structure and the uniformity of the heat transfer.

The basis weight of the reinforcing fibers is measured by cutting out a 10-cm square region from a sheet-shaped material of the reinforcing fibers, measuring the mass of the cut region, and dividing the mass by the area of the region. The measurement is performed ten times at different sites of the sheet-shaped material of the reinforcing fiber, and the average of the measured values is employed as the basis weight of the reinforcing fibers.

[Reinforcing Fiber]

In the present invention, examples of the reinforcing fibers for use in the fiber reinforced resin sheet, the prepreg, and the fiber reinforced foam include organic fibers such as aramid fibers, polyethylene fibers, and polyparaphenylene benzoxazole (PBO) fibers; inorganic fibers such as glass fibers, carbon fibers, silicon carbide fibers, alumina fibers, tyranno fibers, basalt fibers, and ceramic fibers; metal fibers such as stainless steel fibers and steel fibers; and boron fibers, natural fibers, and modified natural fibers. In particular, the carbon fibers are lightweight among these reinforcing fibers, moreover have particularly excellent properties in specific strength and specific modulus, and are also excellent in heat resistance and chemical resistance, and thus are suitable for members such as automobile panels and blades for aircraft propulsion devices for which weight reduction is desired. In particular, PAN based carbon fibers from which high-strength carbon fibers are easily obtained are preferred.

[Matrix Resin]

The first matrix resin and the second matrix resin are cured in the flat lightweight member according to the present invention.

Examples of the first matrix resin for use in the prepreg according to the present invention include thermosetting resins such as epoxy resins, unsaturated polyester resins, vinyl ester resins, phenol resins, epoxy acrylate resins, urethane acrylate resins, phenoxy resins, alkyd resins, urethane resins, maleimide resins, and cyanate resins; and thermoplastic resins such as polyamide resins, polyacetal resins, polyacrylate resins, polysulfone resins, acrylic butadiene styrene (ABS) resins, polyester resins, acrylic resins, polybutylene terephthalate (PBT) resins, polyethylene terephthalate (PET) resins, polyethylene resins, polypropylene resins, polyphenylene sulfide (PPS) resins, polyether ether ketone (PEEK) resins, liquid crystal polymers, vinyl chloride, fluorine-based resins such as polytetrafluoroethylene, and silicones. It is preferable to use the thermosetting resins, in particular. The first matrix resin is a thermosetting resin, thereby causing the prepreg to have tackiness at room temperature, and thus even when the skin layer is composed of multiple prepregs, the layers are integrated by adhesion, and can be molded while maintaining the intended laminated configuration.

Examples of the second matrix resin for use in the core layer according to the present invention include thermosetting resins such as epoxy resins, unsaturated polyester resins, vinyl ester resins, phenol resins, epoxy acrylate resins, urethane acrylate resins, phenoxy resins, alkyd resins, urethane resins, maleimide resins, and cyanate resins; and thermoplastic resins such as polyamide resins, polyacetal resins, polyacrylate resins, polysulfone resins, acrylic butadiene styrene (ABS) resins, polyester resins, acrylic resins, polybutylene terephthalate (PBT) resins, polyethylene terephthalate (PET) resins, polyethylene resins, polypropylene resins, polyphenylene sulfide (PPS) resins, polyether ether ketone (PEEK) resins, liquid crystal polymers, vinyl chloride, fluorine-based resins such as polytetrafluoroethylene, and silicones. In addition, it is preferable to use the thermosetting resins, in particular. The second matrix resin is a thermosetting resin, thereby causing the cured matrix resin to cover the periphery of the lightweight particles of the core layer to form a porous structure, and thus, even when heat is applied to the flat lightweight member, the core layer can be prevented from being deformed or expanded.

In the first matrix resin and the second matrix resin according to the present invention, the glass transition temperature of the first matrix resin is preferably higher than the glass transition temperature of the second matrix resin.

[Lightweight Particles]

The lightweight particles in the flat lightweight member according to the present invention mean thermally expandable resin particles that cause a volume expansion with increase in temperature by heating at the time of molding, and thermally expandable particles that are already thermally expanded but can be compressed by pressurization.

The thermally expandable particles causes a volume expansion when the particles are mixed with the second matrix resin and heated, and when the second matrix resin is a thermosetting resin, the thermosetting resin is subjected to curing to form a core layer that has a lightweight porous structure. Alternatively, when the second matrix resin is a thermoplastic resin, the molten thermoplastic resin is solidified at the time of cooling, or the softened thermoplastic resin is bound to form a core layer that has a lightweight porous structure.

The volume expansion coefficient $\alpha$ (%) of the mixture of the thermally expandable particles and the second matrix resin is expressed by the following formula (1), where the volume of the mixture before being expanded is denoted by $V_1$ (cm$^3$), and the volume thereof after being expanded is denoted by $V_2$ (cm$^3$).

$$\alpha = 100 \times (V_2 - V_1) \div V_1 \ ...(1)$$

In the core layer, the volume expansion coefficient $\alpha$ preferably falls within the range of 30% or more and 2000% or less, although the volume expansion coefficient $\alpha$ varies depending on the ratio by weight between the thermally expandable particles and the second matrix resin and the heating conditions at the time of molding.

Examples of the thermally expandable particles include a polyacrylonitrile-based copolymer, a polymethacrylonitrile-based copolymer, a polyvinylidene chloride-based copolymer, a polystyrene or polystyrene-based copolymer, a polyolefin, and a polyphenylene oxide-based copolymer, and the thermally expandable particles are preferably capsule-shaped particles including therein a thermally expandable gas. In particular, thermally expandable particles that have a hydrocarbon with a low boiling point as a thermally expandable gas are preferred, because the thermally expandable particles is large in volume expansion coefficient and capable of forming a lightweight core layer.

The sizes of the thermally expandable particles are preferably adapted such that the average particle diameter before undergoing the volume expansion falls within the range of 1 μm to 1 mm. Setting the average particle diameter to be 1 μm or more allows the thermally expandable particles to be kept from leaking out to the surface of the flat lightweight member due to resin flow at the time of molding. In addition, setting the diameter to be 1 mm or less causes the thermally expandable particles to enter even the thin part of the core layer, thus allowing the core layer to be made lightweight, and allowing the density unevenness of the thermally expandable particles and second matrix resin in the core layer to be reduced.

Examples of such thermally expandable particles include "Matsumoto Microsphere" (registered trademark) manufactured by Matsumoto Yushi-Seiyaku Co., Ltd., "Expancel" (registered trademark) manufactured by Nobel Corporation, and "ESLEN Beads" manufactured by SEKISUI CHEMICAL CO., LTD., but the present invention is not to be considered limited to these products.

In the present invention, as the lightweight particles, only one type of thermally expandable particles may be used, or multiple types of thermally expandable particles may be used in mixture. In addition, the thermally expandable particles may be used alone, or may be used in mixture with particles that are not thermally expanded, such as glass beads.

[Further Aspect of Present Invention]

In the flat lightweight member according to the present invention, the reinforcing fibers raised from the skin layer are in the core layer.

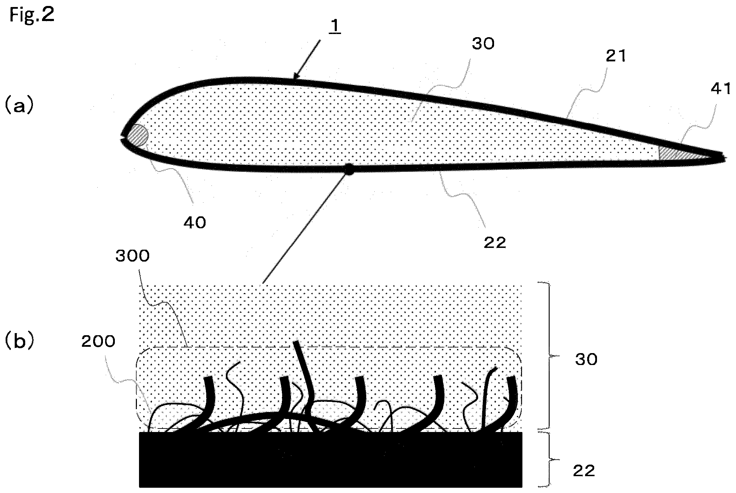

Fig. 2 is an embodiment of the flat lightweight member according to the present invention, where Fig. 2(a) shows a cross-sectional view that shows an example of a raised skin layer of the flat lightweight member 1, and Fig. 2(b) shows an enlarged view of an example of the raised skin layer in the flat lightweight member 1. Fig. 2(b) shows therein the skin layer 22, raised reinforcing fibers 200, the core layer 30, and a fiber reinforced part 300 of the core layer partially reinforced by inclusion of the raised reinforcing fibers.

In this regard, the state of the reinforcing fibers raised means a state with one or more reinforcing fibers protruding in an out-of-plane direction from the surface (the surface with the largest surface area) of the fiber reinforced resin sheet, prepreg, or fiber reinforced foam. The lower limit of the lengths of the protruding reinforcing fibers is preferably 0.1 mm or more, more preferably 0.5 mm or more, still more preferably 1 mm or more. If the lengths fall below the lower limit, there is concern that the reinforcing fibers entered into the core layer may come off. In addition, the upper limit of the lengths of the protruding reinforcing fibers is preferably 100 mm or less, more preferably 50 mm or less, still more preferably 10 mm or less. If the lengths exceed the upper limit, there is a possibility that the reinforcing fibers may be broken at the time of raising. In this regard, the length of the raised reinforcing fiber is determined by embedding and polishing a region including a boundary part between the skin layer and the core layer as in Fig. 2(b), and then measuring the length of the reinforcing fiber entered into the core layer through cross-section observation. The raised reinforcing fibers are preferably continuously connected from the skin layer to the core layer, and the employment of such a configuration allows the adhesion between the skin layer and the core layer to be strengthened.

In addition, in the flat lightweight member according to the present invention, the reinforcing fibers raised from the end reinforcing layer are preferably in the core layer.

The raised reinforcing fibers are continuously connected from the end reinforcing layer to the core layer, and the employment of such a configuration allows the adhesion between the end reinforcing layer and the core layer to be strengthened.

The method for raising the reinforcing fibers as described above will be described later.

In the flat lightweight member according to the present invention, the space surrounded by the skin layer and the end reinforcing layer is preferably a closed space. More specifically, the periphery of the core layer is preferably covered with the skin layer and the end reinforcing layer.

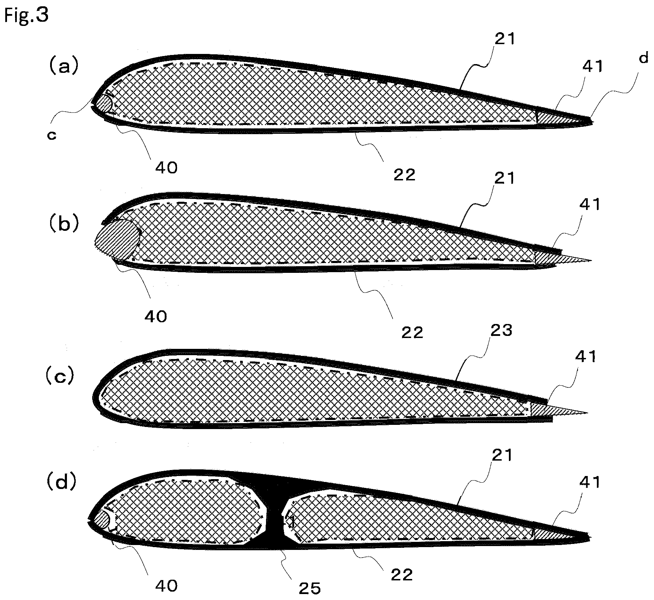

Fig. 3 shows examples of the cross section of the flat lightweight member according to the present invention (cross section in the same direction as the A-A' cross section shown in Fig. 1). In Fig. 3(a), both ends c and d of the flat lightweight member are completely reached by the skin layers 21 and 22, and the entire surface of the flat lightweight member is covered with the skin layers 21 and 22. In Fig. 3(b), the end reinforcing layers 40 and 41 are exposed at the surface of the flat lightweight member. Furthermore, in Fig. 3(c), one end c of the flat lightweight member is covered with the skin layer 23, and the end reinforcing layer 41 is exposed at the surface of the flat lightweight member at the other end d. In addition, in Fig. 3(d), both ends c and d of the flat lightweight member are completely reached by the skin layers 21 and 22, and the skin layers 21 and 22 are united between both ends of the flat lightweight member (between the one end c and the other end d) to form an internal reinforcing layer 25. The internal reinforcing layer 25 can be formed by partially increasing the thickness of the skin layer, and can be also formed by a method of disposing a prepreg laminate that is different from the skin layers between the skin layers 21 and 22, a method of disposing reinforcing fibers that have the same configuration as that of the end reinforcing layer between the skin layers 21 and 22, a method of disposing reinforcing fibers such as a prepreg around a core to form a part in the shape of the internal reinforcing layer and disposing the part between the skin layers 21 and 22, and the like. The cross section with such an internal reinforcing layer disposed can take charge of a large shear load applied to the cross section, and is thus a preferred aspect that is excellent in mechanical property. In this regard, in any of Figs. 3(a) to 3(d), it is determined that the entire surface of the flat lightweight member is covered with the skin layers 21 and 22 and the end reinforcing layers 40 and 41, with the region surrounded by the skin layers 21 and 22 and the end reinforcing layers 40 and 41 being closed. In addition, one closed region in Figs. 3(a) to 3(c) and two closed regions in Fig. 3(d) are formed by the skin layers and the end reinforcing layers.

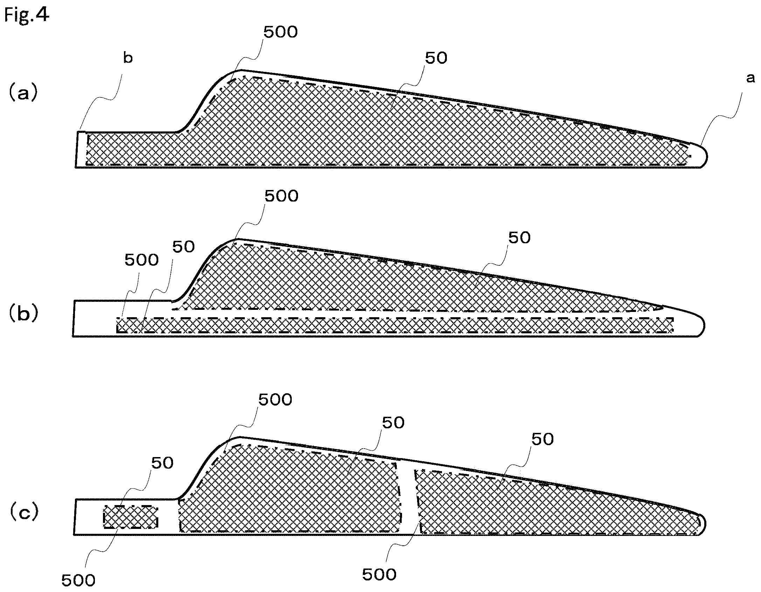

Fig. 4 shows examples of a perspective top view of the flat lightweight member according to the present invention, and illustrates a closed space 50 in which the core layer according to the present invention is disposed and an outline 500 thereof. The closed space 50 is present inside the surface of the flat lightweight member 1, and is composed of the closed region described with reference to Fig. 3 from a distal end a toward a root part b in Fig. 4. Furthermore, at the distal end a and the root part b, the closed space 50 is closed by the skin layers and the end reinforcing layers, or by a laminate of prepregs that are different from the skin layers and the skin layers. Accordingly, the core layer according to the present invention, disposed in the closed space 50, is not exposed at the surface of the flat lightweight member 1.

Fig. 4(a) illustrates a case where the flat lightweight member according to the present invention has one closed space. Fig. 4(b) illustrates a case where the flat lightweight member according to the present invention has two closed spaces that are parallel to each other from the distal end a toward the root part b. Fig. 4(c) illustrates a case where the flat lightweight member according to the present invention has three closed spaces discontinuously from the distal end a toward the root part b. In Figs. 4(b) and 4(c), it is between the multiple closed spaces that an internal reinforcing layer of the skin layers united is provided, the internal reinforcing layer can be formed by partially increasing the thickness of the skin layer, and can be also formed by a method of disposing a prepreg laminate that is different from the skin layers between the skin layers 21 and 22, a method of disposing reinforcing fibers that have the same configuration as that of the end reinforcing layer between the skin layers 21 and 22, a method of disposing reinforcing fibers such as a prepreg around a core to form a part in the shape of the internal reinforcing layer and disposing the part between the skin layers 21 and 22, and the like.

For the flat lightweight member according to the present invention, the end reinforcing layer is preferably disposed on the entire peripheral edge. The employment of such a configuration improves the mechanical property at the ends of the flat lightweight member, and allows the lightweight particles and second matrix that form the core layer to be kept from leaking to the surface of the flat lightweight member.

The flat lightweight member according to the present invention preferably has a form with the core layer including the reinforcing fibers raised from the skin layers or the end reinforcing layers, as mentioned above. In order to obtain such a form, it is preferable to use an incised prepreg as at least a part of the prepreg used for constituting the skin layer or the end reinforcing layer. In particular, the form is suitable when the flat lightweight member has variations in thickness or a complicated three-dimensional shape.

The incised prepreg is a prepreg that has incisions regularly distributed over the entire in-plane area, and continuous reinforcing fibers constituting the prepreg are cut at sites with the incisions present. Such regularly distributed incisions can be provided, for example, by the method described in Patent Document 3 described above.

The incised prepreg can be used for the skin layers or the end reinforcing layers in combination with a normal prepreg that merely has continuous fibers for the reinforcing fibers and has no incision.

Such an incised prepreg makes incised sites more likely to have openings or deviations generated, and improves the stretchability of the prepreg in the reinforcing fiber direction. In addition, the flow at the time of compression molding opens the incised sites to separate the fiber strands of the reinforcing fibers from each other, thereby causing the prepreg to exhibit flexibility and improving the fluidity. Employing a configuration such that the prepreg can flow in this manner causes the reinforcing fibers to reach even the ends to reduce the region where the resin is excessive, thereby allowing a flat lightweight member that is excellent in mechanical property and appearance to be obtained. It is to be noted that from the viewpoint of fluidity, incisions are preferably made over the entire area in the thickness direction of the prepreg.

The use of the incised prepreg for the skin layer is preferred, because the reinforcing fibers are likely to be raised, and can be in the core layer to form a strong adhesive surface. In addition, the use allows the ends of the raised reinforcing fibers to be in the core layer, thus allowing the raised reinforcing fibers to be deep in the core layer, and allowing the adhesion between the core layer and the skin layer to be enhanced.

As the skin layer, an integrated laminate of a non-incised prepreg and an incised prepreg may be used. In this case, it is preferable to dispose the incised prepreg at the surface of contact with the core layer. Such an aspect is a preferred aspect in which the incised prepreg allows the adhesion between the core layer and the skin layer to be strengthened, while the non-incised prepreg exhibits an excellent mechanical property.

The use of the incised prepreg for the end reinforcing layer is preferred in that tightness in the fiber directions can be suppressed, when the end reinforcing layer is pressed against the end outline of the flat lightweight member and then deformed with the expansion of the core layer, thus suppressing the "resin rich" and the generation of voids, and easily improving the appearance quality and mechanical property at the ends. The fiber directions of the reinforcing fibers in the end reinforcing layer are preferably directions along the end outline of the flat lightweight member.

For the flat lightweight member according to the present invention, the fiber reinforced resin sheet preferably has a wound structure or a folded structure in the end reinforcing layer.

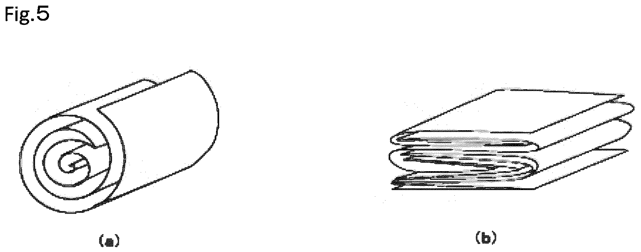

Fig. 5(a) shows an example of a wound structure, and Fig. 5(b) shows an example of a folded structure. The end reinforcing layer that has a wound structure can be easily adjusted in thickness and cross-sectional area by adjusting the amount of winding up the fiber reinforced resin sheet such as a prepreg, and moreover, is also easily manufactured, and thus, can be used particularly suitably when the end of the flat lightweight member has a rounded shape. In contrast, the end reinforcing layer that has a folded-back structure is easily changed in thickness by adjusting the width of folding the fiber reinforced resin sheet such as a prepreg or adjusting the frequency of folding the sheet, and easily adjusted in thickness to be thinner than the wound structure, and thus, can be used particularly suitably when the end of the flat lightweight member has a sharp shape. More specifically, in Figs. 3(a) to 3(d), the end reinforcing layer 40 preferably has a wound structure, and the end reinforcing layer 41 preferably has a folded structure.

[Manufacturing Method]

A method for manufacturing the flat lightweight member according to the present invention is a method for manufacturing a flat lightweight member with the use of a double-sided die including an upper die and a lower die, the method characterized by including: a preparing step of preparing one skin layer and the other skin layer with the use of a prepreg including reinforcing fibers aligned in one direction and a first matrix resin, and preparing an end reinforcing layer with the use of a fiber reinforced resin sheet; a first disposing step of disposing the one skin layer in the lower die heated to a molding temperature, and placing the end reinforcing layer on at least a part of a peripheral edge of the one skin layer; an introducing step of placing a mixture of lightweight particles (thermally expandable particles) and a second matrix resin on the inner surface of the one skin layer (the inner-side surface of the skin layer, in flat lightweight member finally obtained); a second disposing step of further disposing the other skin layer on the upper surface of the one skin layer, and then bringing the end reinforcing layer into contact with at least a part of a peripheral edge of the other skin layer; and a die closing step of closing the upper die heated to the molding temperature, and further including a step of expanding the volume of the lightweight particles to form a core layer.

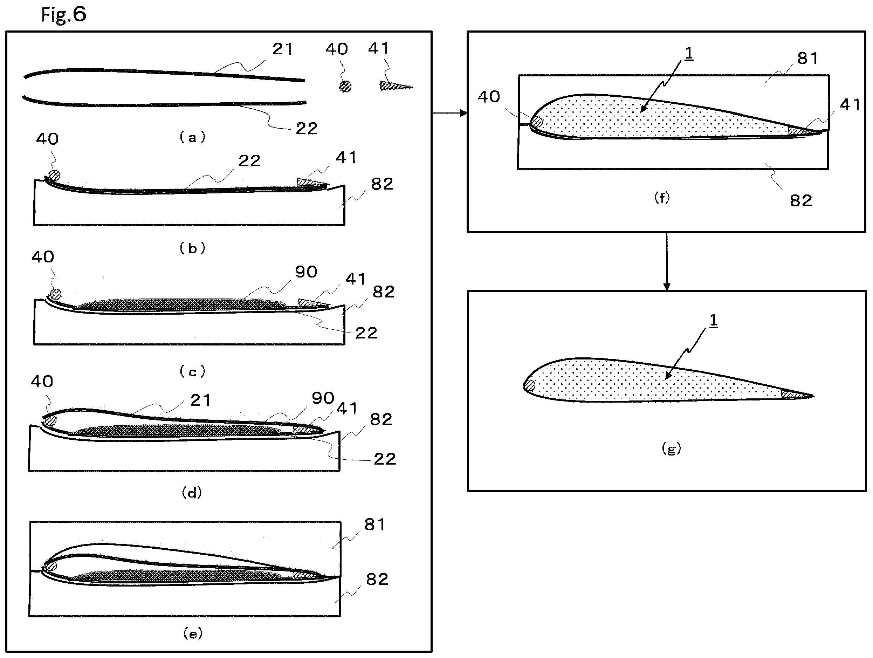

Fig. 6 shows respective steps in a method for manufacturing the flat lightweight member according to the present invention, and the flat lightweight member is molded with the use of a double-sided die that has a cavity formed in the shape of the flat lightweight member at the mating surface between an upper die and a lower die.

Fig. 6(a) is a preparing step, which is a step of preparing one skin layer 22, the other skin layer 21, and the end reinforcing layers 40 and 41.

The skin layers 21 and 22 can be prepared, for example, by cutting, from a sheet-shaped prepreg, cut prepregs that have a desired shape and a desired fiber orientation, and then laminating the cut prepregs, if necessary. In addition, for example, sheet-shaped prepregs can be laminated in a desired fiber orientation, and then cut into a desired shape to prepare the skin layers.

The end reinforcing layers can be prepared, for example, by laminating fiber reinforced resin sheets until reaching a predetermined thickness and then cutting the laminate into a predetermined width, or can be prepared as elongated strip-shaped members by pultrusion molding or extrusion molding.

When the end reinforcing layer has a wound structure, the end reinforcing layer is obtained by, for example, preparation of winding one fiber reinforced resin sheet in order from the end. Furthermore, for example, one fiber reinforced resin sheet can be also folded and then wound to prepare the end reinforcing layer. In addition, also from a plurality of fiber reinforced resin sheets laminated, a wound structure can be obtained in accordance with the same procedure.

When the end reinforcing layer has a folded structure, for example, one fiber reinforced resin sheet is folded in two or three, and the folded fiber reinforced resin sheet is further folded to prepare the end reinforcing layer. Furthermore, for example, a thin wound structure that has a flat cross-sectional shape can be prepared from one fiber reinforced resin sheet, and then folded to prepare the end reinforcing layer. In addition, also from a plurality of fiber reinforced resin sheets laminated, a folded structure can be obtained in accordance with the same procedure.

In the case of using a prepreg as the fiber reinforced sheet, the prepreg can be prepared by laminating a sheet-shaped prepreg cut into an elongated form, or a tape-shaped prepreg slit tape. In the case of using a fiber reinforced foam as the fiber reinforced sheet, the fiber reinforced foam can be prepared by cutting a sheet-shaped fiber reinforced foam into an elongated form.

Next, Fig. 6(b) shows a first disposing step. In this step, the one skin layer 22 is disposed in a lower die 82 heated to a molding temperature, and the end reinforcing layers 40 and 41 are each placed on at least a part of the peripheral edge of the one skin layer 22. The molding temperature set as the temperature of the lower die depends on the types of the first matrix resin and second matrix resin, and in the case of using a thermosetting resin, the molding temperature preferably falls within the temperature range of 80°C or higher and 230°C or lower. The molding temperature of 80°C or higher allows the reactions of the matrix resins to be accelerated, and the temperature of 230°C or lower allows the decomposition of the matrix resins to be suppressed. In addition, the manufacturing method according to the present invention eliminates the need to raise or lower the temperature of the die, thus allowing the manufacturing time to be shortened as compared with the conventional method of raising or lowering the temperature of the die.

In the first disposing step, the one skin layer may be disposed in the planar form in the lower die, or may be shaped into a three-dimensional shape in advance and then disposed in the lower die. In addition, the linear end reinforcing layer may be disposed while being bent along the peripheral edge of the one skin layer, or may be bent in advance along the shape of the peripheral edge and disposed. In particular, in the case of using a thermosetting resin as the first matrix resin, the skin layer and the end reinforcing layers are integrated by the tackiness of the prepreg, thus facilitating the positioning of the end reinforcing layers, which is preferred.

Subsequently, Fig. 6(c) shows an introducing step. This step is a step of placing a mixture 90 of the lightweight particles (thermally expandable particles) and second matrix resin on the inner surface of the one skin layer 22. In the introducing step, there is a need to pay attention such that the mixture of the lightweight particles and second matrix resin will not flow out of the one skin layer beyond the end reinforcing layers. Accordingly, the mixture preferably does not adhere to sites of the end reinforcing layers with which the other skin layer is brought into contact. Introducing the mixture of the lightweight particles and second matrix resin inside the peripheral edge to keeping the mixture inside the peripheral edge portion allows the lightweight particles to be prevented from flowing out to the surface of the flat lightweight member from between the end reinforcing layers and the skin layer. In addition, the mixture of the lightweight particles and second matrix resin is preferably introduced so as to be applied to the entire inner surface of the one skin layer, because a homogeneous core layer can be obtained.

In the introducing step, the mixture of lightweight particles and second matrix resin is preferably preheated. The use of such a method decreases the viscosity of the mixture of the lightweight particles and second matrix resin, thus allowing the charging time to be shortened and facilitating the introducing amount. The mixture of the lightweight particles and second matrix resin can be preheated with the use of an oven or a microwave oven.

Furthermore, Fig. 6(d) shows a second disposing step. In this step, the other skin layer 21 is further disposed over the upper surface of the one skin layer 22, to bring the end reinforcing layers 40 and 41 each into contact with at least a part of the peripheral edge of the other skin layer 22. In the second disposing step, the other skin layer may be disposed in the planar form in the lower die, or may be shaped into a three-dimensional shape in advance and then disposed in the lower die. In particular, when a thermosetting resin is used as the first matrix resin, the skin layer and the end reinforcing layers are integrated by the tackiness of the prepreg, thus facilitating the positioning of the end reinforcing layers, which is preferred.

Fig. 6(e) is a die closing step, which is a step of closing an upper die 81 heated to the molding temperature. In the die closing step, the one skin layer, the end reinforcing layers, and the other skin layer are pressed and then integrated. The temperature of the upper die is preferably set to be the same temperature as the temperature of the lower die, but the method for manufacturing a flat lightweight member according to the present invention is not limited thereto. In addition, the inside of the cavity can be evacuated during the die closing step. The use of such a method reduces voids in the skin layers and the end reinforcing layers to improve the mechanical property of the flat lightweight member, and can prevent the surface from generating bubbles, and thus, can provide a flat lightweight member that is excellent in appearance quality, which is preferred. The die closing step is completed when the double-sided die including the upper die and the lower die are completely closed.

As shown in Fig. 6(f), the lightweight particles, which are thermally expandable particles, start to expand in volume after reaching a predetermined temperature, thereby forming a core layer. The expansion of the lightweight particles causes the skin layers and the end reinforcing layers to be pressed against the die cavity by the core layer, and then pressurized. Thereafter, as shown in Fig. 6(g), a flat lightweight member with excellent quality can be obtained by curing and removing the die.

A method for manufacturing the flat lightweight member according to the present invention is a method for manufacturing a flat lightweight member with the use of a double-sided die including an upper die and a lower die, the method characterized by including: a preparing step of preparing a skin layer with an end reinforcing layer, where the end reinforcing layer is bonded to a peripheral edge of one skin layer, and the other skin layer, with the use of a prepreg including reinforcing fibers aligned in one direction and a first matrix resin; a first disposing step of disposing the skin layer with the end reinforcing layer in the lower die heated to a molding temperature; an introducing step of placing a mixture of lightweight particles and a second matrix resin the inner surface of the one skin layer; and a second disposing step of further disposing the other skin layer in the lower die to bring the end reinforcing layer into contact with the peripheral edge of the one skin layer; and a die closing step of closing the upper die heated to the molding temperature, and further expanding the volume of the lightweight particles to form a core layer.

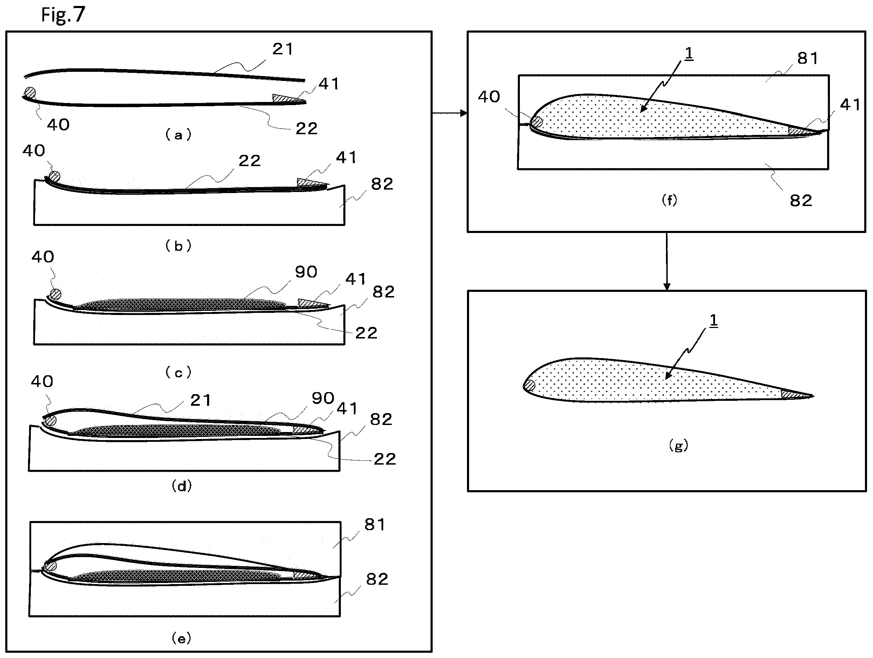

Fig. 7 shows the respective steps in more detail, and also in this method, a fiber-reinforced resin is molded with the use of a double-sided die that has a cavity formed in the shape of the flat lightweight member at the mating surface of an upper die and a lower die.

Fig. 7(a) is a preparing step, which is a step of preparing a skin layer with end reinforcing layers where the end reinforcing layers 40 and 41 made from a fiber reinforced resin sheet are each bonded to at least a part of the peripheral edge of the one skin layer 22 made from a prepreg including reinforcing fibers aligned in one direction and a first matrix resin, and the other skin layer 21 made from the prepreg.

The skin layers and the end reinforcing layers can each be prepared by the method described above. The skin layer with the end reinforcing layers can be produced by bonding the end reinforcing layers to the peripheral edge of the one skin layer. When a thermosetting resin is used as the first matrix resin, the skin layer and the end reinforcing layers can be bonded to each other by the tackiness of the prepreg. Alternatively, when a thermoplastic resin is used as the first matrix resin, the end reinforcing layers and the one skin layer can be heated to the melting temperature of the thermoplastic resin, pressed, and cooled to bond the end reinforcing layers and the one skin layer to each other. In addition, the end reinforcing layers can be bonded to the one skin layer with the use of a resin adhesive or a resin adhesive film.

Further, Fig. 7(b) shows a first disposing step, Fig. 7(c) shows an introducing step, Fig. 7(d) shows a second disposing step, and Fig. 7(e) shows a die closing step. These steps may be performed by the same methods as described above with reference to Fig. 6, and a flat lightweight member with excellent quality can be obtained through such steps.

In the method for manufacturing a flat lightweight member according to the present invention, an incised prepreg is preferably used as the prepreg. The use of the incised prepreg for the skin layer is preferred, because the reinforcing fibers are likely to be raised, and the raised reinforcing fibers can be deep in the core layer to form a strong adhesive surface. As the skin layer, an integrated laminate of a non-incised prepreg and an incised prepreg may be used. In this case, it is preferable to dispose the incised prepreg on the side close to the surface of contact with the core layer. Such an aspect is a preferred aspect, because the incised prepreg allows the adhesion between the core layer and the skin layer to be strengthened, while the non-incised prepreg exhibits an excellent mechanical property.

The use of the incised prepreg for the end reinforcing layer is preferred in that tightness in the fiber directions can be suppressed, when the end reinforcing layer is pressed against the end outline of the flat lightweight member and then deformed with the expansion of the core layer, thus suppressing the "resin rich" and the generation of voids, and allowing improvements in the appearance quality and mechanical property at the ends. The fiber directions of the reinforcing fibers in the end reinforcing layer are preferably directions along the end outline of the flat lightweight member.

In the method for manufacturing a flat lightweight member according to the present invention, it is preferable to raise the inner surface of at least one skin layer before the completion of the die closing step. In particular, in the introducing step, raising the reinforcing fibers at the inner surface of at least one skin layer is a preferred aspect. The reinforcing fibers at the inner surface of the one skin layer can be raised by introducing the mixture of the lightweight particles and second matrix resin with the use of a spatula or the like so as to be applied to the entire inner surface of the skin layer. In addition, the reinforcing fibers at the inner surface of the one skin layer can be raised by applying the mixture of the lightweight particles and second matrix resin while allowing the mixture to flow from a higher part of the skin layer to a low part thereof by gravity. Preheating the mixture of the lightweight particles and second matrix resin is preferred because the flow by gravity can be effectively utilized. The preheating temperature depends on the molding temperature and the expansion start temperature of the lightweight particles, and is preferably 40°C or higher and 180°C or lower, more preferably 70°C or higher and 130°C or lower. Setting the preheating temperature to be equal to or higher than the lower limit of the preferred range decreases the viscosity of the second matrix resin to allow the resin can flow, whereas setting the temperature to be equal to or lower than the upper limit suppresses the thermal expansion of the lightweight particles, thus allowing the resin to be applied over a sufficient period of time in the introducing step.

In the method for manufacturing a flat lightweight member according to the present invention, it is preferable to raise the reinforcing fibers at the inner surfaces of the end reinforcing layers before the completion of the die closing step. In particular, when a fiber reinforced foam is used as the end reinforcing layers, the fiber reinforced foam is heated in the die, thereby causing the reinforcing fibers included in the fiber reinforced foam to spring back to raise the reinforcing fibers, and the reinforcing fibers are in the core layer, thereby firmly integrating the core layer and the end reinforcing layers.

INDUSTRIAL APPLICABILITY

The method for manufacturing a flat lightweight member according to the present invention can be applied to the manufacture of any flat lightweight member, and the obtained flat lightweight member is suitably used as a propeller blade structure, for example, in a transportation facility such as an aircraft, an automobile, or a ship, or in the field of sports or leisure.

DESCRIPTION OF REFERENCE SIGNS

> 1: Flat lightweight member
> 21, 22, 23: Skin layer
> 200: Raised reinforcing fibers of skin layer
> 30: Core layer
> 300: Fiber reinforced part of core layer partially including raised reinforcing fibers of skin layer
> 40, 41: End reinforcing layer
> 50: Closed space
> 500: Outline of closed space
> 81: Upper die
> 82: Lower die
> 90: Mixture

**Claims**

1. A flat lightweight member (1) comprising: skin layers (21, 22, 23) disposed on both surfaces of the flat lightweight member (1); an end reinforcing layer (40, 41) disposed to have contact with both inner surfaces of the skin layers (21, 22, 23) on the both surfaces at an end of the flat lightweight member (1); and a core layer (30) disposed in a space surrounded by the skin layers (21, 22, 23) and the end reinforcing layer (40, 41) to have direct contact with the inner surfaces of the skin layers (21, 22, 23), wherein the skin layer (21, 22, 23) comprises one or more layers comprising reinforcing fibers aligned in one direction and a first matrix resin, the end reinforcing layer comprises a fiber reinforced resin sheet, and the core layer (30) comprises thermally expandable particles and a second matrix resin, **characterized in that** the reinforcing fibers (200) raised from the skin layers are in the core layer (30).

2. The flat lightweight member (1) according to claim 1, wherein the fiber reinforced resin sheet comprises reinforcing fibers aligned in one direction and a first matrix resin.

3. The flat lightweight member (1) according to claim 1, wherein the fiber reinforced resin sheet is a fiber reinforced foam comprising reinforcing fibers.

4. The flat lightweight member (1) according to any one of claims 1 to 3, wherein the reinforcing fibers raised from the end reinforcing layer (40, 41) are in the core layer (30).

5. The flat lightweight member (1) according to any one of claims 1 to 4, wherein a space surrounded by the skin layers (21, 22, 23) and the end reinforcing layer is a closed space.

6. The flat lightweight member according to any one of claims 1 to 5, wherein in the end reinforcing layer (40, 41), the fiber reinforced resin sheet has a wound structure or a folded structure.

7. A method for manufacturing a flat lightweight member (1) with use of a double-sided die comprising an upper die (81) and a lower die (82), the method comprising:

> a preparing step of preparing one skin layer (21, 22, 23) and the other skin layer (21, 22, 23) with use of a prepreg comprising reinforcing fibers aligned in one direction and a first matrix resin, and preparing an end reinforcing layer (40, 41) with use of a fiber reinforced resin sheet;
> a first disposing step of disposing the one skin layer (21, 22, 23) in the lower die (82) heated to a molding temperature, and placing the end reinforcing layer (40, 41) on at least a part of a peripheral edge of the one skin layer (21, 22, 23); an introducing step of placing a mixture (90) of thermally expandable particles and a second matrix resin on the one skin layer (21, 22, 23); a second disposing step of further disposing the other skin layer (21, 22, 23) on an upper surface of the one skin layer (21, 22, 23), and then bringing the end reinforcing layer (40, 41) into contact with at least a part of a peripheral edge of the other skin layer (21, 22, 23); and a die closing step of closing the upper die (81) heated to the molding temperature, and further comprising a step of expanding the thermally expandable particles in volume to form a core layer (30).

8. A method for manufacturing a flat lightweight member (1) with use of a double-sided die comprising an upper die (81) and a lower die (82), the method comprising:

a preparing step of bonding an end reinforcing layer (40, 41) comprising a fiber reinforced resin sheet to at least a part of a peripheral edge of one skin layer (21, 22, 23) comprising a prepreg comprising reinforcing fibers aligned in one direction and a first matrix resin to prepare a skin layer (21, 22, 23) with the end reinforcing layer (40, 41), and preparing the other skin layer (21, 22, 23) comprising the prepreg; a first disposing step of disposing the skin layer (21, 22, 23) with the end reinforcing layer (40, 41) in the lower die (82) heated to a molding temperature; an introducing step of introducing a mixture (90) of thermally expandable particles and a second matrix resin on the one skin layer (21, 22, 23); a second disposing step of further disposing the other skin layer (21, 22, 23) over an upper surface of the skin layer (21, 22, 23) with the end reinforcing layer (40, 41) to bring the end reinforcing layer (40, 41) into contact with at least a part of a peripheral edge of the other skin layer (21, 22, 23); and a die closing step of closing the upper die (81) heated to the molding temperature, and further comprising a step of expanding the thermally expandable particles in volume to form a core layer (30).

9. The method for manufacturing a flat lightweight member (1) according to claim 7 or 8, wherein the reinforcing fiber resin sheet is a prepreg comprising reinforcing fibers aligned in one direction and a first matrix resin.

10. The method for manufacturing a flat lightweight member (1) according to claim 7 or 8, wherein the reinforcing fiber resin sheet is a fiber reinforced foam comprising reinforcing fibers.

11. The method for manufacturing a flat lightweight member (1) according to any one of claims 7 to 10, wherein an incised prepreg is used as the prepreg.

12. The method for manufacturing a flat lightweight member (1) according to any one of claims 7 to 11, wherein a site of at least the one skin layer (21, 22, 23) corresponding to an inner surface of the flat lightweight member (1) is raised before completing the die closing step.

13. The method for manufacturing a flat lightweight member (1) according to any one of claims 7 to 12, wherein a site of the end reinforcing layer (40, 41) corresponding to an inner surface of the flat lightweight member (1) is raised before completing the die closing step.

**Patentansprüche**

1. Flaches Leichtelement (1), umfassend: Hautschichten (21, 22, 23), die auf beiden Oberflächen des flachen Leichtelements (1) angeordnet sind; eine Endverstärkungsschicht (40, 41), die so angeordnet ist, dass sie Kontakt mit beiden inneren Oberflächen der Hautschichten (21, 22, 23) auf den beiden Oberflächen an einem Ende des flachen Leichtelements (1) hat; und eine Kernschicht (30), die in einem Raum angeordnet ist, der von den Hautschichten (21, 22, 23) und der Endverstärkungsschicht (40, 41) umgeben ist, um direkten Kontakt mit den inneren Oberflächen der Hautschichten (21, 22, 23) zu haben, wobei die Hautschicht (21, 22, 23) eine oder mehrere Schichten umfasst, die Verstärkungsfasern, die in einer Richtung ausgerichtet sind, und ein erstes Matrixharz umfassen, die Endverstärkungsschicht eine faserverstärkte Harzlage umfasst und die Kernschicht (30) thermisch expandierbare Teilchen und ein zweites Matrixharz umfasst, **dadurch gekennzeichnet, dass** die Verstärkungsfasern (200), die von den Hautschichten erhaben sind, in der Kernschicht (30) sind.

2. Flaches Leichtelement (1) nach Anspruch 1, wobei die faserverstärkte Harzlage Verstärkungsfasern, die in einer Richtung ausgerichtet sind, und ein erstes Matrixharz umfasst.

3. Flaches Leichtelement (1) nach Anspruch 1, wobei die faserverstärkte Harzlage ein faserverstärkter Schaum ist, der Verstärkungsfasern umfasst.

**4.** Flaches Leichtelement (1) nach einem der Ansprüche 1 bis 3, wobei sich die Verstärkungsfasern, die von der Endverstärkungsschicht (40, 41) erhaben sind, in der Kernschicht (30) befinden.

**5.** Flaches Leichtelement (1) nach einem der Ansprüche 1 bis 4, wobei ein Raum, der von den Hautschichten (21, 22, 23) und der Endverstärkungsschicht umgeben ist, ein geschlossener Raum ist.

**6.** Flaches Leichtelement nach einem der Ansprüche 1 bis 5, wobei in der Endverstärkungsschicht (40, 41) die faserverstärkte Harzlage eine gewickelte Struktur oder eine gefaltete Struktur aufweist.

**7.** Verfahren zum Herstellen eines flachen Leichtelements (1) unter Verwendung einer doppelseitigen Matrize, die eine obere Matrize (81) und eine untere Matrize (82) umfasst, wobei das Verfahren umfasst:

einen Vorbereitungsschritt des Vorbereitens einer Hautschicht (21, 22, 23) und der anderen Hautschicht (21, 22, 23) unter Verwendung eines Prepregs, das Verstärkungsfasern, die in einer Richtung ausgerichtet sind, und ein erstes Matrixharz umfasst, und des Vorbereitens einer Endverstärkungsschicht (40, 41) unter Verwendung einer faserverstärkten Harzlage;
einen ersten Anordnungsschritt des Anordnens der einen Hautschicht (21, 22, 23) in der unteren Matrize (82), die auf eine Formtemperatur erwärmt ist, und des Platzierens der Endverstärkungsschicht (40, 41) auf mindestens einem Teil einer Umfangskante der einen Hautschicht (21, 22, 23);
einen Einführungsschritt des Platzierens einer Mischung (90) aus thermisch expandierbaren Teilchen und einem zweiten Matrixharz auf der einen Hautschicht (21, 22, 23);
einen zweiten Anordnungsschritt des weiteren Anordnens der anderen Hautschicht (21, 22, 23) auf einer oberen Oberfläche der einen Hautschicht (21, 22, 23) und dann des Inkontaktbringens der Endverstärkungsschicht (40, 41) mit mindestens einem Teil einer Umfangskante der anderen Hautschicht (21, 22, 23); und
einen Matrizenschließschritt des Schließens der oberen Matrize (81), die auf die Formtemperatur erwärmt ist, und
ferner umfassend einen Schritt des Expandierens der thermisch expandierbaren Teilchen im Volumen, um eine Kernschicht (30) zu bilden.

**8.** Verfahren zum Herstellen eines flachen Leichtelements (1) unter Verwendung einer doppelseitigen Matrize, die eine obere Matrize (81) und eine untere Matrize (82) umfasst, wobei das Verfahren umfasst:

einen Vorbereitungsschritt des Verbindens einer Endverstärkungsschicht (40, 41), die eine faserverstärkte Harzlage umfasst, mit mindestens einem Teil einer Umfangskante einer Hautschicht (21, 22, 23), die ein Prepreg umfasst, das Verstärkungsfasern, die in einer Richtung ausgerichtet sind, und ein erstes Matrixharz umfasst, um eine Hautschicht (21, 22, 23) mit der Endverstärkungsschicht (40, 41) vorzubereiten, und des Vorbereitens der anderen Hautschicht (21, 22, 23), die das Prepreg umfasst;
einen ersten Anordnungsschritt des Anordnens der Hautschicht (21, 22, 23) mit der Endverstärkungsschicht (40, 41) in der unteren Matrize (82), die auf eine Formtemperatur erwärmt ist;
einen Einführungsschritt des Einführens einer Mischung (90) aus thermisch expandierbaren Teilchen und einem zweiten Matrixharz auf der einen Hautschicht (21, 22, 23);
einen zweiten Anordnungsschritt des weiteren Anordnens der anderen Hautschicht (21, 22, 23) über einer oberen Oberfläche der Hautschicht (21, 22, 23) mit der Endverstärkungsschicht (40, 41), um die Endverstärkungsschicht (40, 41) in Kontakt mit mindestens einem Teil einer Umfangskante der anderen Hautschicht (21, 22, 23) zu bringen; und
einen Matrizenschließschritt des Schließens der oberen Matrize (81), die auf die Formtemperatur erwärmt ist, und
ferner umfassend einen Schritt des Expandierens der thermisch expandierbaren Teilchen im Volumen, um eine Kernschicht (30) zu bilden.

**9.** Verfahren zum Herstellen eines flachen Leichtelements (1) nach Anspruch 7 oder 8, wobei die faserverstärkte Harzlage ein Prepreg ist, das Verstärkungsfasern, die in einer Richtung ausgerichtet sind, und ein erstes Matrixharz umfasst.

**10.** Verfahren zum Herstellen eines flachen Leichtelements (1) nach Anspruch 7 oder 8, wobei die faserverstärkte Harzlage ein faserverstärkter Schaum ist, der Verstärkungsfasern umfasst.

**11.** Verfahren zum Herstellen eines flachen Leichtelements (1) nach einem der Ansprüche 7 bis 10, wobei ein eingeschnittenes Prepreg als das Prepreg verwendet wird.

**12.** Verfahren zum Herstellen eines flachen Leichtelements (1) nach einem der Ansprüche 7 bis 11, wobei eine Stelle von mindestens der einen Hautschicht (21, 22, 23), die einer inneren Oberfläche des flachen Leichtelements (1) entspricht, erhaben ist, bevor der Matrizenschließschritt abgeschlossen ist.

**13.** Verfahren zum Herstellen eines flachen Leichtelements (1) nach einem der Ansprüche 7 bis 12, wobei eine Stelle der Endverstärkungsschicht (40, 41), die einer inneren Oberfläche des flachen Leichtelements (1) entspricht, erhaben ist, bevor der Matrizenschließschritt abgeschlossen ist.

## Revendications

1. Elément plat léger (1) comprenant : des couches de peau (21, 22, 23) disposées sur les deux surfaces de l'élément plat léger (1) ; une couche de renforcement d'extrémité (40, 41) disposée pour avoir un contact avec les deux surfaces internes des couches de peau (21, 22, 23) sur les deux surfaces à une extrémité de l'élément plat léger (1) ; et une couche centrale (30) disposée dans un espace entouré par les couches de peau (21, 22, 23) et la couche de renforcement d'extrémité (40, 41) pour avoir un contact direct avec les surfaces internes des couches de peau (21, 22, 23), dans lequel la couche de peau (21, 22, 23) comprend une ou plusieurs couches comprenant des fibres de renforcement alignées dans une direction et une première résine de matrice, la couche de renforcement d'extrémité comprend une feuille de résine renforcée de fibres, et la couche centrale (30) comprend des particules thermiquement expansibles et une seconde résine de matrice, **caractérisé en ce que** les fibres de renforcement (200) surélevées par rapport aux couches de peau sont dans la couche centrale (30).

2. Elément plat léger (1) selon la revendication 1, dans lequel la feuille de résine renforcée de fibres comprend des fibres de renforcement alignées dans une direction et une première résine de matrice.

3. Elément plat léger (1) selon la revendication 1, dans lequel la feuille de résine renforcée de fibres est une mousse renforcée de fibres comprenant des fibres de renforcement.

4. Elément plat léger (1) selon l'une quelconque des revendications 1 à 3, dans lequel les fibres de renforcement surélevées à partir de la couche de renforcement d'extrémité (40, 41) sont dans la couche centrale (30).

5. Elément plat léger (1) selon l'une quelconque des revendications 1 à 4, dans lequel un espace entouré par les couches de peau (21, 22, 23) et la couche de renforcement d'extrémité est un espace fermé.

6. Elément plat léger selon l'une quelconque des revendications 1 à 5, dans lequel, dans la couche de renforcement d'extrémité (40, 41), la feuille de résine renforcée de fibres a une structure enroulée ou une structure pliée.

7. Procédé de fabrication d'un élément plat léger (1) à l'aide d'une matrice double face comprenant une matrice supérieure (81) et une matrice inférieure (82), le procédé comprenant :

    une étape de préparation consistant à préparer une couche de peau (21, 22, 23) et l'autre couche de peau (21, 22, 23) à l'aide d'un préimprégné comprenant des fibres de renforcement alignées dans une direction et une première résine de matrice, et à préparer une couche de renforcement d'extrémité (40, 41) à l'aide d'une feuille de résine renforcée de fibres ;
    une première étape de disposition consistant à disposer la couche de peau (21, 22, 23) dans la matrice inférieure (82) chauffée à une température de moulage, et à placer la couche de renforcement d'extrémité (40, 41) sur au moins une partie d'un bord périphérique de la couche de peau (21, 22, 23) ;
    une étape d'introduction consistant à placer un mélange (90) de particules thermiquement expansibles et d'une seconde résine de matrice sur la couche de peau (21, 22, 23) ;
    une seconde étape de disposition consistant à disposer en outre l'autre couche de peau (21, 22, 23) sur une surface supérieure de la couche de peau (21, 22, 23), puis à amener la couche de renforcement d'extrémité (40, 41) en contact avec au moins une partie d'un bord périphérique de l'autre couche de peau (21, 22, 23) ; et
    une étape de fermeture de matrice consistant à fermer la matrice supérieure (81) chauffée à la température de moulage, et
    comprenant en outre une étape consistant à expanser les particules thermiquement expansibles en volume pour former une couche centrale (30).

8. Procédé de fabrication d'un élément plat léger (1) à l'aide d'une matrice double face comprenant une matrice supérieure (81) et une matrice inférieure (82), le procédé comprenant :

    une étape de préparation consistant à lier une couche de renforcement d'extrémité (40, 41) comprenant une feuille de résine renforcée de fibres à au moins une partie d'un bord périphérique d'une couche de peau (21, 22, 23) comprenant un préimprégné comprenant des fibres de renforcement alignées dans une direction et une première résine de matrice pour préparer une couche de peau (21, 22, 23) avec la couche de renforcement d'extrémité (40, 41), et préparer l'autre couche de peau (21, 22, 23) comprenant le préimprégné ;
    une première étape de disposition consistant à disposer la couche de peau (21, 22, 23) avec la couche de renforcement d'extrémité (40, 41) dans la matrice inférieure (82) chauffée à une température de moulage ;

une étape d'introduction consistant à introduire un mélange (90) de particules thermiquement expansibles et d'une seconde résine de matrice sur la couche de peau (21, 22, 23) ;

une seconde étape de disposition consistant à disposer en outre l'autre couche de peau (21, 22, 23) sur une surface supérieure de la couche de peau (21, 22, 23) avec la couche de renforcement d'extrémité (40, 41) pour amener la couche de renforcement d'extrémité (40, 41) en contact avec au moins une partie d'un bord périphérique de l'autre couche de peau (21, 22, 23) ; et

une étape de fermeture de matrice consistant à fermer la matrice supérieure (81) chauffée à la température de moulage, et

comprenant en outre une étape consistant à expanser les particules thermiquement expansibles en volume pour former une couche centrale (30).

9. Procédé de fabrication d'un élément plat léger (1) selon la revendication 7 ou 8, dans lequel la feuille de résine renforcée de fibres est un préimprégné comprenant des fibres de renforcement alignées dans une direction et une première résine de matrice.

10. Procédé de fabrication d'un élément plat léger (1) selon la revendication 7 ou 8, dans lequel la feuille de résine renforcée de fibres est une mousse renforcée de fibres comprenant des fibres de renforcement.

11. Procédé de fabrication d'un élément plat léger (1) selon l'une quelconque des revendications 7 à 10, dans lequel un préimprégné incisé est utilisé en tant que préimprégné.

12. Procédé de fabrication d'un élément plat léger (1) selon l'une quelconque des revendications 7 à 11, dans lequel un site d'au moins la couche de peau (21, 22, 23) correspondant à une surface interne de l'élément plat léger (1) est surélevé avant d'achever l'étape de fermeture de matrice.

13. Procédé de fabrication d'un élément plat léger (1) selon l'une quelconque des revendications 7 à 12, dans lequel un site de la couche de renforcement d'extrémité (40, 41) correspondant à une surface interne de l'élément plat léger (1) est surélevé avant d'achever l'étape de fermeture de matrice.

Fig.1

(a)

(b)

EP 4 316 792 B1

Fig.2

(a)

(b)

EP 4 316 792 B1

Fig.3

(a)

(b)

(c)

(d)

EP 4 316 792 B1

Fig.4

Fig.5

(a)

(b)

Fig.6

(a)

(b)

(c)

(d)

(e)

(f)

(g)

EP 4 316 792 B1

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020151876 A
- JP 8276441 A
- JP 5272418 B
- US 2009149284 A1
- WO 14162873 A
- JP 2014172201 A